# EUROPÄISCHE PATENTSCHRIFT

(11) **EP 0 784 186 B1**
(45) Veröffentlichungstag und Bekanntmachung des Hinweises auf die Patenterteilung: **11.08.1999**
(21) Anmeldenummer: 96118416.5
(22) Anmeldetag: 16.11.1996
(51) Int. Cl.: F22B 31/00, F23C 11/02

(54) **Dampferzeuger mit durckaufgeladener zirkulierender Wirbelschichtfeuerung**
Steam generator with supercharged circulating fluidized bed combustion
Générateur de vapeur avec combustion sous pression en lit fluidisé circulant

(30) Priorität: 13.01.1996 DE 19601031
(43) Veröffentlichungstag der Anmeldung: 16.07.1997
(73) Patentinhaber: LLB Lurgi Lentjes Energietechnik GmbH, 40549 Düsseldorf (DE)
(72) Erfinder: Eickenberg, Leonhard, 41379 Bruggen (DE)
(74) Vertreter: Radünz, Ingo, Dipl.-Ing.

(56) Entgegenhaltungen:
- EP-A- 0 407 730
- EP-A- 0 679 837
- BROWN BOVERI REVIEW, Bd. 73, Nr. 5, Mai 1986, BADEN CH, Seiten 239-250, XP002029218 D.K. MUKHERJEE: "Coal-Fired Power Station With Pressurized Fluidized Bed Combustion - Brown Boveri's Design Concept"
- PATENT ABSTRACTS OF JAPAN vol. 096, no. 010, 31.Oktober 1996 & JP 08 159415 A (ISHIKAWAJIMA HARIMA HEAVY IND CO LTD)

## Beschreibung

Die Erfindung betrifft einen Dampferzeuger mit druckaufgeladener zirkulierender Wirbelschichtfeuerung mit den Merkmalen des Oberbegriffes des Anspruches 1. Ein derartiger Dampferzeuger ist beispielsweise im Artikel von D.K. Mukherjee, "Coal-Fired Power Station with Pressurized Fluidized Bed Combustion-Brown Boveri's Design Concept", BROWN BOVERI REVIEW Bd 73, Nr.5, Mai 1986, Seiten 239-250, beschrieben.

Dieser Dampferzeuger ist Teil einer kombinierten Gas-Dampf-Kraftanlage, bei der die in der Wirbelbrennkammer erzeugten Rauchgase nach einer Heißgasreinigung mit der Temperatur des Wirbelbettes von 800 bis 1000 °C der Gasturbine zugeführt werden. Bei diesem Kombiprozeß können die günstigen Verbrennungs- und Emissionseigenschaften einer unter hohem Überdruck arbeitenden zirkulierenden Wirbelschichtfeuerung und die besondere Wärmeaufnahmeverteilung aus der Abkühlung von Rauchgas und Feststoff in dem Dampferzeuger zur optimalen Energieausnutzung mit dem Gasturbinenbetrieb verbunden werden.

Der Erfindung liegt die Aufgabe zugrunde, die einzelnen Komponenten des Reaktions- und Wärmetauschsystems des Dampferzeugers besonders günstig aufeinander abzustimmen.

Diese Aufgabe wird bei einem gattungsgemäßen Dampferzeuger erfindungsgemäß durch die kennzeichnenden Merkmale des Anspruches 1 gelöst. Vorteilhafte Ausgestaltungen der Erfindung sind Gegenstand der Unteransprüche.

Durch die Erfindung ergibt eine Anordnung mit vergleichsweise geringem Raum- und Materialbedarf. Ferner werden die Charakteristiken der schadstoffarmen Verbrennungsreaktion einschließlich der unvermeidbaren Toleranzen unabhängig von den individuell unterschiedlichen Charakteristiken des Feststofftransportes und des Wärmetausches mit den ebenso unvermeidbaren Toleranzen unabhängig voneinander verfahrenstechnisch berücksichtigt, und es ergibt sich auf diese Weise eine besonders flexible, über große Lastbereiche stabile und für beliebige Dampfparameter ausführbare Einrichtung. Ein weiterer Vorteil ist die günstige Ausnutzbarkeit extremer Dampfparameter mittels höchstlegierter Werkstoffe im Bereich moderater Zulauftemperaturen in Verbindung mit äußerst geringen Materialmengen. Dabei existieren die zur Zeit bei Dampferzeugern üblicher Bauweise mit flexiblen Brennstoffen erreichbaren Grenzen nicht mehr, die aus der statischen Belastbarkeit der Umfassungsrohrwände und deren Materialspezifikation resultierten.

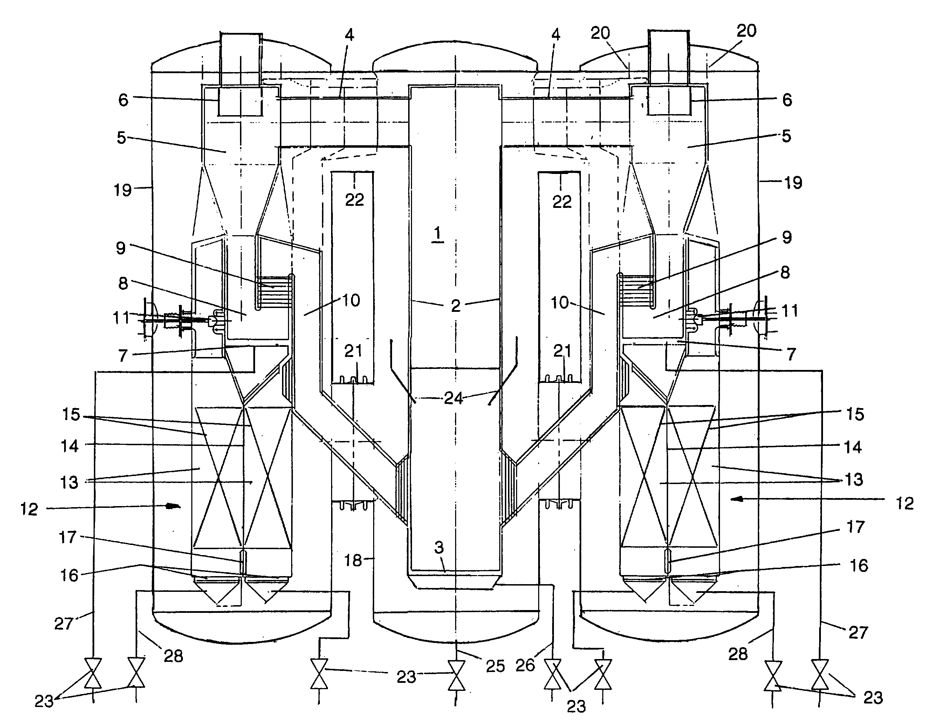

Ein Ausführungsbeispiel der Erfindung ist in der Zeichnung dargestellt und wird im folgenden näher erläutert. Die Zeichnung zeigt schematisch einen Dampferzeuger.

Von einem kombinierten Gas-Dampf-Kraftwerk ist nur der Dampferzeuger gezeigt. Dieser Dampferzeuger wird durch eine zirkulierende Wirbelschichtfeuerung beheizt und enthält eine Wirbelbrennkammer 1. Die Wirbelbrennkammer 1 ist durch Rohrwände 2 aus gasdicht miteinander verschweißten Rohren begrenzt. Der Querschnitt der Wirbelbrennkammer 1 ist im unteren Teil an den zwei gegenüberliegenden Wände, die in der Darstellung nicht zu sehen sind, nach unten konisch eingezogen. Die Rohrwände 2 der Wirbelbrennkammer 1 sind insbesondere in dem unteren stark mit Feststoff angereicherten Teil keramisch verkleidet, um einen Verschleiß an den Rohren zu verhindern. Es kann aber auch vorgesehen werden, den oberen, weniger mit Feststoff beladenen Teil der Wirbelbrennkammer 1 mittels keramischer Auskleidungen, welche günstige Wärmeleiteigenschaften aufweisen, gegen den Verschleiß durch den Feststoff zu schützen. Innerhalb der Wirbelbrennkammer 1 sind keine Wärmeaustauschflächen untergebracht. Die Wirbelbrennkammer 1 ist unten durch einen Düsenboden 3 abgeschlossen.

An den oberen Teil der Wirbelbrennkammer 1 schließen sich eine oder mehrere Verbindungsleitungen 4 an, die jeweils zu einem Zyklon 5 führen. In den Zyklonen 5 wird der mitgeführte Feststoff aus dem Rauchgas abgetrennt, und das von Feststoffen befreite Rauchgas wird über das Tauchrohr 6 des Zyklons 5 einen Heißgasfilter und ohne Abkühlung anschließend der nicht gezeigten Gasturbinenanlage zugeführt.

Der Feststoffaustrag des Zyklons 5 mündet in einen mit einem Düsenboden 7 versehenen Tauchtopf 8, der im Prinzip als Siphon arbeitet und als Feststoffrückströmsperre einen rauchgasseitigen Kurzschluß zwischen der Wirbelbrennkammer 1 und dem Zyklon 5 verhindert. Die offene Seite des Tauchtopfes 8 ist mit einen Überlaufwehr 9 versehen und mit einer Rückführleitung 10 verbunden. Die Rückführleitung 10 mündet in die Wirbelbrennkammer 1.

Der Tauchtopf 8 ist mit einer durch ein Regelorgan 11 verschließbaren Öffnung zur Entnahme einer Teilmenge aus dem Hauptfeststoffrückführstrom versehen. Das Regelorgan 11 kann aus einem von außen betätigbaren Ventil in Form eines Spießes bestehen, der mit einem keramischem oder metallischem Verschleiß- und Wärmeschutz versehen ist. Es kann auch ein Überlauf mit einem Wehr verwendet werden, das mittels Verbrennungsluft pneumatisch betrieben wird und dessen Überlaufkante entweder horizontal oder geneigt angeordnet sein kann. Die Regulierung des pneumatischen Luftstromes kann kontinuierlich, stoßartig oder impulsgesteuert vorgenommen werden. Die Höhe der Überlaufkante kann gegenüber der Höhe des Überlaufes des Tauchtopfes 8 fix oder variabel einstellbar sein.

Unterhalb des Tauchtopfes 8 befindet sich ein Fließbettkühler 12, dem der aus dem Tauchtopf 8 über das Regelorgan 11 abgezweigte Feststoffnebenstrom zugeführt wird. Der Fließbettkühler 12 enthält mehrere Kammern 13, die durch eine Trennwand 14 voneinander getrennt sind. Jede Kammer 13 des Fließbettkühlers 12 nimmt ein Wärmetauscherbündel 15 auf. Unterhalb jeder Kammer 13 befindet sich ein Düsenboden, durch den Luft zur Fluidisierung des Feststoffinhalt der Kammer 13 eingeblasen wird. Die Düsenböden der Kammern 13 können aus derselben oder aus separaten Quellen mit Fluidisierungsluft versorgt werden. Im dargestellten Fall liegen zwei Kammern 13 nebeneinander. Insbesondere bei höheren Leistungen können die Kammern 13 auch übereinander angeordnet sein. Der Feststoffstrom durch die Kammern 13 kann abwärts oder aufwärts gerichtet sein. Die Kammern 13 des dargestellten Fließbettkühlers 12 sind durch eine Öffnung 17 in der Trennwand 14 unterhalb der Wärmetauscherbündel 15 miteinander verbunden. Auf diese Weise wird in der ersten von dem Feststoff beaufschlagten Kammer 13 ein Abwärtsstrom und in der danach vom gleichen Feststoff beaufschlagten Kammer 13 ein Aufwärtstrom erzeugt. Es ist auch möglich, einen Teilfeststoffstrom abwärts zu leiten und einen Ergänzungsfeststoffstrom direkt der nachgeschalteten Kammer 13 durch entsprechende Wahl der Höhe eines Wehres in der Trennwand 14 zwischen den Kammern 13 zuzuleiten.

Das Austragsende der zuletzt durchströmten Kammer 13 steht mit der Rückführleitung 10 in Verbindung. Auf diese Weise wird der Feststoff sowie die Fluidisierungsluft aus dem Fließbettkühler 12 und dem Tauchtopf 8 über die gleiche Rückführleitung 10 in die Wirbelbrennkammer 1 geführt. Der von der Wirbelbrennkammer 1 in den Zyklon 5 transportierte Feststoff wird als Wärmeträger benutzt, dem in dem Fließbettkühler 12 unter Zuhilfenahme der Fluidisierungsluft, die eine Teilmenge der Verbrennungsluft ist, Wärme entzogen wird. Der Feststoff entwickelt dabei eine hohe Wärmeübergangsfähigkeit, wodurch mit kleinsten Wärmeübertragungsflächen große Wärmemengen übertragen werden. Der so abgekühlte Feststoffstrom wird nach der Wärmeabgabe ganz oder teilweise mit dem ungekühlten Feststoffrückführstrom gemischt und zu der Wirbelbrennkammer 1 zurückgeleitet.

Der Zyklon 5, der Tauchtopf 8, der Fließbettkühler 12, die Verbindungsleitung 4 und die Rückführleitung 10 sind ebenso wie die Wirbelbrennkammer 1 durch Rohrwände aus gasdicht miteinander verschweißten Rohren begrenzt. Die Rohrwände sind aus ebenen Rohrtafeln geformt und bilden ein Vieleck, wobei die kleinste Eckenzahl 4 sein kann. Die Rohrwände werden durch geeignete Außenbandagen gegen unzulässige Verformungen geschützt.

Zum Ausgleich des hohen Gasgegendruckes der Gasturbine werden die einzelnen Komponenten des Dampferzeugers in separaten zylindrischen Druckgefäßen mit vorzugsweise senkrechter Achse untergebracht. Ein erstes Druckgefäß 18 umschließt die Wirbelbrennkammer 1. Ein weiteres Druckgefäß 19 nimmt jeweils einen Zyklon 5 mit dem darunter befindlichen Tauchtopf 8 und dem Fließbettkühler 12 auf. Der Zyklon 5, der Tauchtopf 8 und der Fließbettkühler 12 sind zu einer Einheit verbunden, die in dem jeweiligen Druckgefäß 19 mittels Anker 20 aufgehängt ist.

Die zylindrischen Druckgefäße 18, 19 sind über zylindrische Schächte 21, 22 mit horizontaler oder geneigter Achse miteinander verbunden. Innerhalb dieser Schächte 21, 22 sind die berohrten Verbindungsleitungen 4 und Rückführleitungen 10 für den Fluid- und Feststofftransport von der Wirbelbrennkammer 1 zu den anderen Komponenten und umgekehrt angeordnet. Diese berohrten Leitungen 4, 10 stellen gleichzeitig die Verbindung zwischen den in den einzelnen Druckgefäßen 18, 19 angeordneten Rohrsystemen her.

Der Zwischenraum zwischen den Druckgefäßen 18, 19 und den darin angeordneten, von den gasdichten Rohrwänden umgebenen Komponenten wird unter leichtem Überdruck gegenüber dem Gasarbeitsdruck im Innenraum der Komponenten gehalten. Der Überdruck wird dadurch hergestellt, daß aus dem Gasturbinenkompressor der angeschlossenen Gasturbinenanlage Sperrluft über eine mit einem Regulierventil 23 versehene Luftleitung 25 in den Zwischenraum eingeblasen wird. Die Sperrluft dient gleichzeitig als Sekundärluft für die Wirbelschichtfeuerung. Zu diesem Zweck sind Sekundärluftdüsen 24 vorgesehen, die durch die Rohrwand 2 des oberen Teiles der Wirbelbrennkammer 1 hindurchgeführt, zu dem Zwischenraum hin offen und mit jeweils einer nicht gezeigten Rückstromsperrvorrichtung versehen sind. Über diese Sekundärluftdüsen 24 ist der Überdruck vorzugsweise selbstregulierend durch die dynamischen Widerstände der Wirbelbrennkammer 1 eingestellt. Im Ausnahmefall kann der Überdruck auch mit Hilfe einer Reguliereinrichtung justiert werden. Die übrigen Luftströme, wie die Primär- und Fluidisierungsluft für die Wirbelbrennkammer 1 und die Fluidisierungsluft für die Tauchtöpfe 8 und die Fließbettkühler 12 werden zwangsläufig mittels separater Luftleitungen 26, 27, 28 zu den einzelnen Düsenböden 3, 7, 16 geführt.

Die Rohre der einzelnen Rohrwände sind wasser/dampfseitig hintereinander geschaltet und zu einem gemeinsamen Wasser-Dampf-Kreislauf verbunden. Dieser Wasser-Dampf-Kreislauf wird als Zwangdurchlauf nach dem Benson-Prinzip betrieben. Die Hintereinanderschaltung im Wasser-Dampf-Kreislauf erfolgt in der Weise, daß vorzugsweise zunächst die Rohrwände des einen Fließbettkühlers 12 und des dazugehörenden Zyklons 5 mit Tauchtopf 8 und anschließend ohne Zwischensammler die Verbindungsleitung 4 und die im gleichen Druckgefäß 19 angeordnete Rückführleitung 10 durchströmt werden. Auf diese Weise ist das das Wasser-Dampf-Gemisch führende Rohrsystem ohne Zusatzverbindungsleitungen in die Wirbelbrennkammer 1 geführt. An das in einem mehrfachen Auf- und Abwärtsstrom geführte Rohrsystem der Wirbelbrennkammer 1 schließt sich in umgekehrter Reihenfolge die zweite Fließbettkühler-Zyklon-Gruppe an. Darauf folgen die Wärmetauscherbündel 15 der Fließbettkühler 12, die als weitere Verdampfer und als Überhitzer geschaltet sind. Der Economiser ist in dem der Gasturbine nachgeschalteten Abhitzekessel untergebracht.

## Patentansprüche

1. Dampferzeuger mit druckaufgeladener zirkulierender Wirbelschichtfeuerung bestehend aus einer Wirbelbrennkammer (1), aus einem oder mehreren der Wirbelbrennkammer (1) rauchgasseitig über eine Verbindungsleitung (4) nachgeschalteten Zyklonen (5), aus einem jedem Zyklon (5) nachgeschalteten Fließbettkühler (12), der über einen Tauchtopf (8) mit dem Feststoffaustrag des Zyklons (5) einerseits und mit der Wirbelbrennkammer (1) andererseits verbunden ist, aus einer Rückführleitung (10), die an den Tauchtopf (8) angeschlossen ist und in die Wirbelbrennkammer (1) einmündet, und aus Druckgefäßen (18, 19), von denen eines die Wirbelbrennkammer (1) aufnimmt, dadurch gekennzeichnet, daß der Fließbettkühler (12), der Tauchtopf (8) und der Zyklon (5) durch Rohrwände aus gasdicht miteinander verschweißten Rohren begrenzt und zu einer Einheit verbunden sind, die in dem anderen Druckgefäß (19) unterbracht und in diesem aufgehängt ist, daß die Rückführleitung (10), die Verbindungsleitung (4) und die Wirbelbrennkammer (1) ebenfalls durch Rohrwände aus gasdicht miteinander verschweißten Rohren begrenzt sind und daß diese Rohrwände wasser-/dampfseitig in Reihe geschaltet und zu einem gemeinsamen, im Zwangdurchlauf betriebenen Wasser-Dampf-Kreislauf verbunden sind.

2. Dampferzeuger nach Anspruch 1, dadurch gekennzeichnet, daß das Austragsende des Fließbettkühlers (12) an die mit dem Tauchtopf (8) verbundene Rückführleitung (10) angeschlossen ist.

3. Dampferzeuger nach Anspruch 1 oder 2, dadurch gekennzeichnet, daß der Raum oberhalb des Tauchtopfes (8) und der Raum oberhalb des Fließbettkühlers (12) mit der Rückführleitung (10) in Verbindung stehen.

4. Dampferzeuger nach einem der Ansprüche 1 bis 3, dadurch gekennzeichnet, daß die Verbindung der Rohrwände direkt ohne Zwischenschaltung von Zwischensammlern erfolgt.

5. Dampferzeuger nach einem der Ansprüche 1 bis 4, dadurch gekennzeichnet, daß die Wandrohre so verschachtelt sind, daß abwärts durchströmte Rohre stets von aufwärts durchströmten Rohren flankiert sind.

6. Dampferzeuger nach einem der Ansprüche 1 bis 5, dadurch gekennzeichnet, daß die Druckgefäße (18, 19) durch waagerechte oder geneigte Schächte (21, 22) verbunden sind, in denen die Verbindungsleitung (4) bzw. die Rückführleitung (10) angeordnet sind und daß die Verbindungsleitung (4) und die Rückführleitung (10) gleichzeitig die Verbindung zwischen den in den Druckgefäßen (18, 19) angeordneten Rohrsystemen darstellen.

7. Dampferzeuger nach einem der Ansprüche 1 bis 6, dadurch gekennzeichnet, daß in die Wirbelbrennkammer (1) Sekundärluftdüsen (24) einmünden, die zu dem Zwischenraum zwischen der Innenwand des Druckgefäßes (18) und der Rohrwand (2) der Wirbelbrennkammer (1) hin offen und mit Rückstromsperrvorrichtungen versehen sind.

8. Dampferzeuger nach einem der Ansprüche 1 bis 7, dadurch gekennzeichnet, daß die Wirbelbrennkammer (1), die Tauchtöpfe (8) und die Fließbettkühler (12) jeweils mit einem Düsenboden (3, 7, 16) versehen sind, die mit separaten Luftzuführungsleitungen (26, 27, 28) verbunden sind.

9. Dampferzeuger nach einem der Ansprüche 1 bis 8, dadurch gekennzeichnet, daß an den Dampferzeuger ein Gasturbinensystem angeschlossen ist, dessen Kompressor mit den Zwischenräumen zwischen den jeweiligen Einbauten und dem sie umgebenden Druckgefäß (18, 19) verbunden ist und daß diese Zwischenräume vorzugsweise ungeregelt dem sich aus dem Gasturbinensystem ergebenden Luftüberdruck vor den Sekundärluftdüsen (24) ausgesetzt sind.

## Claims

1. Steam generator with pressurised circulating fluidised bed fumace consisting of a fluidised combustion chamber (1), of one or more cyclones (5) connected downstream of the fluidised combustion chamber (1) at the flue gas side by way of a connecting duct (4), of a fluidised bed cooler (12) which is connected downstream of each cyclone (5) and which is connected by way of an immersion pot (8) on the one hand with the solid material outlet of the cyclone (5) and on the other hand with the fluidised combustion chamber (1), of a return duct (10) which is connected to the immersion pot (8) and opens into the fluidised combustion chamber (1), and of pressure vessels (18, 19), of which one receives the fluidised combustion chamber (1), characterised in that the fluidised bed cooler (12), the immersion pot (8) and the cyclones (5) are defined by pipe walls of pipes, which are welded together in gas-tight manner, and are connected into a unit, which is accommodated in the other pressure vessel (19) and suspended therein, that the return duct (10), the connecting duct (4) and the fluidised combustion chamber (1) are similarly defined by pipe walls of pipes welded together in gas-tight manner and that these pipe walls are connected in series at the water side/steam side into a common water/steam circuit operated with forced throughflow.

2. Steam generator according to claim 1, characterised in that the delivery end of the fluidised bed cooler (12) is connected to the return duct (10) connected with the immersion pot (8).

3. Steam generator according to claim 1 or 2, characterised in that the space above the immersion pot (8) and the space above the fluidised cooler (12) stand in connection with the retum duct (10).

4. Steam generator according to one of claims 1 to 3, characterised in that the connection of the pipe walls is carried out directly without interposition of intermediate collectors.

5. Steam generator according to one of claims 1 to 4, characterised in that the pipe walls are so nested that pipes flowed through downwardly are always flanked by pipes flowed through upwardly.

6. Steam generator according to one of claims 1 to 5, characterised in that the pressure vessels (18, 19) are connected by horizontal or inclined shafts (21, 22) in which the connecting duct (4) and the retum duct (10) are arranged and that the connecting duct (4) and the retum duct (10) at the same time represent the connection between the pipe systems arranged in the pressure vessels (18, 19).

7. Steam generator according to one of claims 1 to 6, characterised in that secondary air nozzles (24), which open into the fluidised combustion chamber (1), open towards the intermediate space between the inner wall of the pressure vessel (18) and the pipe wall (2) of the fluidised combustion chamber (1) and are provided with return flow blocking devices.

8. Steam generator according to one of claims 1 to 7, characterised in that the fluidised combustion chamber (1), the immersion pots (8) and the fluidised bed coolers (12) are each provided with a respective tuyere base (3, 7, 16), which bases are connected with separate air feed ducts (26, 27, 28).

9. Steam generator according to one of claims 1 to 8, characterised in that a gas turbine system, the compressor of which is connected with the intermediate spaces between the respective installations and the pressure vessel (18, 19) surrounding them, is connected to the steam generator and that these intermediate spaces are subjected, preferably unregulated, to the air excess pressure, which is produced by the gas turbine system, ahead of the secondary air nozzles (24).

## Revendications

1. Générateur de vapeur à foyer à lit fluidisé circulant chargé par pression, constitué d'une chambre de combustion fluidisée (1), d'un ou plusieurs cyclones (5) branchés en circuit en aval de la chambre de combustion fluidisée (1), côté gaz de fumée, par l'intermédiaire d'une conduite de liaison (4), d'un refroidisseur de lit fluidisé (12) branché en aval de chaque cyclone (5) et, relié par l'intermédiaire d'un pot d'immersion (8), à l'évacuation des solides du cyclone (5) d'une part, et à la chambre de combustion fluidisée (1) d'autre part, d'une conduite de recirculation (10) raccordée au pot d'immersion (8) s'abouchant dans la chambre de combustion fluidisée (1), et de récipients à pression (18, 19), dont l'un reçoit la chambre de combustion fluidisée (1), caractérisé en ce que le refroidisseur de lit fluidisé (12), le pot d'immersion (8) et le cyclone (5) sont délimités par des parois tubulaires constituées de tubes soudés ensemble de façon étanche aux gaz et reliés pour former un ensemble, en étant logés dans l'autre récipient à pression (19) et suspendus dans celui-ci, en ce que la conduite de recirculation (10), la conduite de liaison (4) et la chambre de combustion fluidisée (1) sont délimitées également par des parois tubulaires constituées de tubes soudés ensemble de façon étanche aux gaz, et en ce que ces parois tubulaires sont branchées en série côté eau/vapeur et sont reliées pour constituer un circuit eau/vapeur commun, fonctionnant en circulation forcée.

2. Générateur de vapeur selon la revendication 1, caractérisé en ce que l'extrémité d'évacuation du refroidisseur de lit fluidisé (12) est raccordée à la conduite de recirculation (10) reliée au pot d'immersion (8).

3. Générateur de vapeur selon la revendication 1 ou 2, caractérisé en ce que l'espace se trouvant au-dessus du pot d'immersion (8) et l'espace se trouvant au-dessus du refroidisseur de lit fluidisé (12) sont reliés à la conduite de recirculation (10).

4. Générateur de vapeur selon l'une des revendications 1 à 3, caractérisé en ce que la liaison des parois tubulaires s'effectue directement, sans interposition de collecteurs intermédiaires.

5. Générateur de vapeur selon l'une des revendications 1 à 4, caractérisé en ce que les parois tubulaires sont imbriquées de manière que des tubes traversés par des écoulements descendants soient toujours flanqués par des tubes traversés par des écoulements ascendants.

6. Générateur de vapeur selon l'une des revendications 1 à 5, caractérisé en ce que les récipients à pression (18, 19) sont reliés par des puits ou sas (21, 22) horizontaux ou inclinés, dans lesquels sont disposées la conduite de liaison (4) et/ou la conduite de recyclage (10), et en ce que la conduite de liaison (4) et la conduite de recyclage (10) constituent simultanément la liaison établie entre les systèmes tubulaires disposés dans les récipients à pression (18, 19).

7. Générateur de vapeur selon l'une des revendications 1 à 6, caractérisé en ce que, dans la chambre de combustion fluidisée, s'abouchent des buses d'air secondaire (24) qui sont ouvertes vers l'espace intermédiaire existant entre la paroi intérieure du récipient à pression (18) et la paroi tubulaire (2) de la chambre de combustion fluidisée (1), et sont dotées de dispositifs d'arrêt d'écoulement en sens inverse.

8. Générateur de vapeur selon l'une des revendications 1 à 7, caractérisé en ce que la chambre de combustion fluidisée (1), les pots d'immersion (8) et les refroidisseurs à lit fluidisé (12) sont chacun dotés d'un fond à buse (3, 7, 16), fonds reliés à des conduites d'amenée d'air (26, 27, 28) séparées.

9. Générateur de vapeur selon l'une des revendications 1 à 8, caractérisé en ce qu'au générateur de vapeur est raccordé un système à turbine à gaz dont le compresseur est relié à l'espace intermédiaire existant entre les éléments intérieurs respectifs et le récipient à pression (18, 19) les entourant, et en ce que ces espaces intermédiaires sont exposés, de préférence de façon non régulée, à la surpression d'air résultant du système à turbine à gaz, avant les buses d'air secondaire (24).
